# EUROPEAN PATENT SPECIFICATION

(11) **EP 3 993 981 B1**
(45) Date of publication and mention of the grant of the patent: **06.09.2023**
(21) Application number: 20761933.9
(22) Date of filing: 08.08.2020
(51) Int. Cl.: B29C 45/14, A61C 7/08, A61C 19/06

(54) **OVERMOLDING TECHNIQUES AND RELATED ARTICLES PRODUCED THEREFROM**
VERFAHREN ZUM UMSPRITZEN UND DARAUS HERGESTELLTE GEGENSTÄNDE
TECHNIQUES DE SURMOULAGE ET ARTICLES ASSOCIÉS PRODUITS À PARTIR DE CELLES-CI

(30) Priority: 09.08.2019 US 201962885060 P; 07.08.2020 US 202016988449
(43) Date of publication of application: 11.05.2022
(73) Proprietor: Ultradent Products, Inc., South Jordan, UT 84095 (US)
(72) Inventor: SOELBERG, Craig, South Jordan, UT 84095 (US); WEI, RuJiun, South Jordan, UT 84095 (US); HOBSON, Barry, South Jordan, UT 84095 (US); PARK, Kyle, South Jordan, UT 84095 (US); MARGETTS, David, L., South Jordan, UT 84095 (US); PEASLEE, Lynn, W., South Jordan, UT 84095 (US)
(74) Representative: Hepworth Browne
(86) International application number: PCT/US2020/045541
(87) International publication number: WO 2021/030231

(56) References cited:
- WO-A1-2019/216774
- US-A1- 2006 138 038
- US-A1- 2007 290 404
- US-A1- 2010 155 972
- Tpe Technology: "Overmolding Guide", , 19 November 2002 (2002-11-19), XP055745191, Retrieved from the Internet: URL:http://dimontegroup.com/wp-content/upl oads/om.pdf [retrieved on 2020-10-29]

## Description

### BACKGROUND

Overmolding is a process where a single part may be created using two or more different materials in combination. Typically, the first material, sometimes referred to as the substrate, is partially or fully covered by subsequent materials during the manufacturing process. Common problems encountered with overmolding are poor adhesion of the substrate and subsequent materials (which may be referred to as the overmold), incomplete molding of the substrate or overmold, surface irregularities, non-uniformities, and material degradation. Other problems that may occur during the overmolding process are warped parts, which may be caused by temperature differences, inadequate cooling time, and insufficient substrate thickness. Further problems that may occur during the overmolding process are voids or openings in the substrate or overmold, delamination, and improper venting during the manufacturing process.

US2007/290404 and US2010/155972 disclose examples of methods of overmolding.

### BRIEF SUMMARY

A need therefore exists for overmolding a material on a substrate that may eliminate one or more of the above-described disadvantages or problems. It will be appreciated that other disadvantages or problems may be addressed, and the various exemplary embodiments do not have to address any particular disadvantages or problems.

The present invention relates to techniques for overmolding a composition onto a substrate, and more particularly, to techniques for overmolding a therapeutic composition onto a substrate configured for delivery of the composition to teeth and/or oral tissue. The overmolding techniques may include injection molding the therapeutic composition onto the substrate, and the therapeutic composition may include one or more therapeutic agents effective for treating one or more oral conditions. For example, in one exemplary form, the therapeutic composition may be a dental whitening gel and/or a desensitizing gel.

Various substrate materials may be used to deliver a composition to a desired location for application or release of the composition. By way of non-liming example, dental and oral treatment devices, such as treatment trays and strips, may be used to deliver dental and oral treatment compositions, such as tooth whitening compositions, desensitizing compositions, and periodontal medicaments, to a user's teeth and/or gums. Dental trays are generally designed to fit over some or all of a user's teeth and may be filled with the oral treatment composition while dental or oral treatment strips generally include a treatment composition disposed on one side or embedded within a barrier layer. The oral treatment composition may be formulated with a sufficiently low viscosity to enable the oral treatment composition to flow such that it can be readily dispensed by a user or during manufacturing. Additionally, the oral treatment composition may be formulated with thickeners and/or tackifying agents to adhere the dental treatment device and/or to a user's teeth to facilitate placement and minimize slippage of the device. Further, in order to provide a long shelf life, the oral treatment compositions may be formulated to maintain a viscous, sticky and/or flowable consistency over time.

The properties of oral treatment compositions, such as viscosity and adhesiveness, may limit the types of processes that can be used to manufacture delivery trays and strips containing such compositions. In addition, it can be difficult to control deposition of the compositions using current processes, thus limiting manufacturing efficiency and consistency. Furthermore, compositions for dental applications may deform or flow out of a dental tray or off of the treatment strip over time, which may reduce product shelf-life. Similarly, the composition may be unintentionally released during user handling of the dental tray or treatment strip before the dental tray or treatment strip is properly positioned for effective oral treatment.

In view of the foregoing, there may be a need for further contributions in this area of technology. The claimed subject matter is not limited to embodiments that solve any disadvantages or that operate only in environments such as those described above. Rather, this information is only provided to illustrate examples of where the present disclosure may be utilized.

In one exemplary embodiment, a method may include positioning a mold relative to a substrate and injecting a composition including a hydrophilic polymer between the mold and the substrate and overmolding the composition onto a surface of the substrate in an overmolded configuration corresponding to a configuration defined by the mold. The method may further include separating the mold from the substrate while substantially retaining the composition in the overmolded configuration.

In another exemplary embodiment, a method may include positioning an overmolding mold relative to a dental tray including a trough defined by inner and outer sidewalls, and overmolding an oral treatment composition on at least a portion of one or both of the inner and outer sidewalls of the dental tray. The oral treatment composition may include at least one therapeutic agent effective for treating an oral condition.

In yet another exemplary embodiment, an oral treatment system may include a dental tray including a trough defined by inner and outer sidewalls, and an oral treatment composition may be overmolded on at least a portion of one or both of the inner and outer sidewalls of the dental tray. The oral treatment composition may include at least one therapeutic agent effective for treating an oral condition.

One aspect is a method comprising positioning a mold relative to a substrate, injecting a composition including a hydrophilic polymer between the mold and the substrate and overmolding the composition onto a surface of the substrate in an overmolded configuration corresponding to a configuration defined by the mold, and separating the mold from the substrate while substantially retaining the composition in the overmolded configuration. The substrate may comprise a substantially arch-shaped dental tray including a trough defined by inner and outer sidewalls, and the composition may be overmolded on at least a portion of one or both of the inner and outer sidewalls. The method may include molding the dental tray with at least one thermoplastic polymer. The composition may include at least one therapeutic agent effective for treating an oral condition. The at least one therapeutic agent may be hydrogen peroxide. The composition may be in the form of a deformable gel exhibiting properties effective for selectively maintaining the composition in the overmolded configuration until use of the dental tray in an oral treatment. The composition may include hydrogen peroxide and injecting the composition may be conducted at a temperature less than about 25° C. The composition may include at least one therapeutic agent effective for treating an oral condition and at least one hydrophobic agent.

Another aspect is a method comprising positioning an overmolding mold relative to a dental tray including a trough defined by inner and outer sidewalls, and overmolding an oral treatment composition on at least a portion of one or both of the inner and outer sidewalls of the dental tray. The oral treatment composition may include at least one therapeutic agent effective for treating an oral condition. The oral treatment composition may be in the form of a gel and may include at least one hydrophilic polymer. The dental tray may be substantially arch-shaped. The method may include positioning a first mold relative to a second mold, and the first and second molds may define a cavity having a configuration corresponding to the dental tray; injecting a thermoplastic polymer between the first and second molds to form the dental tray; and separating the first mold from the second mold and retaining the dental tray in contact with the first mold. The overmolding mold may be positioned relative to the dental tray and the first mold. The at least one therapeutic agent may be selected from dental bleaching agents, dental whitening agents, desensitizing agents, remineralizing agents, anesthetics, anti-plaque agents, anti-tartar agents, antimicrobials, antibiotics, disinfectants, antiseptics, anti-oxidants, healing agents, glossing agents and combinations thereof. The overmolding may be conducted at a temperature less than about 25° C. The overmolding may include injecting the oral treatment composition between the overmolding mold and the dental tray.

Still another aspect is an oral treatment system that may comprise a dental tray including a trough defined by inner and outer sidewalls, and an oral treatment composition overmolded on at least a portion of one or both of the inner and outer sidewalls of the dental tray. The oral treatment composition may include at least one therapeutic agent effective for treating an oral condition. The therapeutic agent may be hydrogen peroxide. The oral treatment composition may comprise a gel, a liquid, a suspension, a paste, a putty, or a foam. The oral treatment composition may include at least one hydrophilic polymer. The oral treatment composition may comprise a gel exhibiting properties effective for resisting deformation until oral use of the dental tray.

A further aspect is an oral treatment system that may be used for treating the teeth and/or oral cavity of a user, The oral treatment system may comprise a substrate sized and configured to be at least partially disposed in a mouth of a user, and a therapeutic composition overmolded onto a surface of the substrate, the therapeutic composition may include at least one therapeutic agent effective for treating an oral condition. In one exemplary embodiment, the substrate may be an oral treatment strip and the therapeutic composition may be overmolded onto at least a portion of an inner surface of the oral treatment strip. In another exemplary embodiment, the substrate may be a substantially arch-shaped dental tray and the therapeutic composition may be overmolded onto at least a portion of an inner surface of the substantially arch-shaped dental tray.

Another further aspect is a method that may include providing a mold, and the mold may include a recessed portion; disposing a substrate in the mold, and the substrate may be sized and configured to be at least partially disposed in a mouth of a user; injecting a therapeutic composition between the mold and the substrate; overmolding the therapeutic composition onto a surface of the substrate, and the therapeutic composition may include at least one therapeutic agent effective for treating an oral condition; and releasing the substrate from the mold while substantially retaining the therapeutic composition on the substrate. The substrate may be an oral treatment strip and the therapeutic composition may be overmolded onto at least a portion of an inner surface of the oral treatment strip. The substrate may be a substantially arch-shaped dental tray and the therapeutic composition may be overmolded onto at least a portion of an inner surface of the substantially arch-shaped dental tray.

These and other aspects, features, and advantages of the invention will become more fully apparent from the following brief description of the drawings, the drawings, the detailed description of preferred embodiments, and appended claims.

### BRIEF DESCRIPTION OF THE DRAWINGS

The appended drawings contain figures of exemplary embodiments to further illustrate and clarify the above and other aspects, advantages and features of the present invention. It will be appreciated that these drawings depict only exemplary embodiments of the invention and are not intended to limits its scope. Additionally, it will be appreciated that while the drawings may illustrate preferred sizes, scales, relationships and configurations of the invention, the drawings are not intended to limit the scope of the claimed invention. The invention will be described and explained with additional specificity and detail through the use of the accompanying drawings in which:
Figure 1 is a perspective view of an exemplary oral treatment strip with an overmolded therapeutic composition;
Figure 2A is a side view of the oral treatment strip illustrated in Figure 1;
Figure 2B is a top view of the oral treatment strip illustrated in Figure 1;
Figure 3 is a section view of the oral treatment strip illustrated in Figure 1 taken along view line 3-3 in Figure 2A;
Figure 4 is a perspective view of another exemplary embodiment of an oral treatment strip;
Figure 5 is a perspective view of an exemplary oral treatment tray with an overmolded therapeutic composition;
Figure 6 is a perspective view of an exemplary mold which may be used for overmolding a therapeutic composition on an oral treatment tray, such as shown in Figure 5;
Figure 7 is a perspective view of a portion of the mold shown in Figure 6, illustrating the mold positioned relative to the oral treatment tray shown in Figure 5;
Figure 8 is another perspective view of a portion of the mold shown in Figure 6, illustrating the mold with the oral treatment tray removed to illustrate the configuration of the overmolded therapeutic composition provided by the mold; and
Figure 9 is a perspective view of an exemplary mold used for preparation of an oral treatment tray, such as the oral treatment tray shown in Figure 5.

### DETAILED DESCRIPTION

For purposes of promoting an understanding of the present disclosure, reference will now be made to the following exemplary embodiments and specific language will be used to describe the same. It will nevertheless be understood that no limitation of the scope of the disclosure is thereby intended, such alterations and further modifications in the described subject matter, and such further applications of the disclosed principles as described herein being contemplated as would normally occur to one skilled in the art to which the disclosure relates.

The terms and words used in the following description and claims are not limited to the bibliographical meanings, but, are merely used to enable a clear and consistent understanding of the disclosure. It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

The term "therapeutic agent" as used herein means and includes any an agent, compound, composition of matter, or mixture thereof, which provides some cosmetic, therapeutic, prophylactic or hygienic benefit within the oral cavity either by direct application to the teeth or oral tissue, or by delivery elsewhere by absorption through the oral tissue.

The term "treatment" as used herein means and includes the process of applying a therapeutic agent or substance containing a therapeutic agent to the teeth or oral tissue to achieve a cosmetic, therapeutic, prophylactic or hygienic benefit and/or to treat or benefit one or more oral conditions, such as whitening, desensitization, and/or remineralization of the teeth.

The present invention relates to techniques for overmolding a composition onto a substrate, and more particularly, to techniques for overmolding a therapeutic composition onto a substrate configured for delivery of the composition to human or animal teeth and/or oral tissue. In one exemplary form, the therapeutic composition may be an oral treatment composition that is a polymeric composition including at least one therapeutic agent effective for treating one or more oral conditions and may be overmolded onto the substrate utilizing injection molding. The principles disclosed herein, however, are not limited to oral and/or dental care applications. Rather, it will be understood that, in light of the present disclosure, the overmolding techniques disclosed herein can be successfully used in other applications.

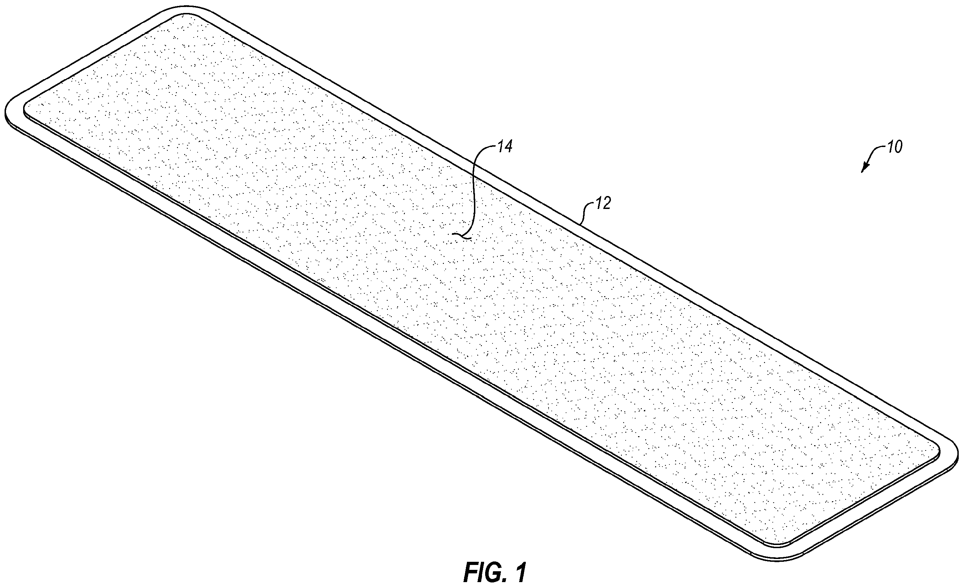

Referring now generally to Figures 1-3, an oral treatment strip 10 may include a substrate 12 onto which a therapeutic composition 14 is overmolded. The substrate 12 may provide support and flexibility, and the therapeutic composition 14 may, for example, be in the form of a gel, suspension, liquid, paste, putty, foam, or the like. While the substrate 12 of the oral treatment strip 10 may include a generally rectangular configuration in the illustrated form, it should be appreciated that other shapes and variations thereof are possible. Moreover, in the illustrated form, the therapeutic composition 14 is overmolded in a shape generally corresponding to the substrate 12. However, in other forms the therapeutic composition 14 may be overmolded in a shape that is generally different than the underlying substrate 12, further details of which will be provided below. Further details relating to the materials from which the substrate 12 and the therapeutic composition 14 may be formed are also provided below.

Generally speaking, the therapeutic composition 14 may be overmolded onto the substrate 12 by positioning a first mold relative to the substrate 12. The relative positioning of the mold and the substrate 12 may be maintained through any suitable means and may, for example, be accomplished through the use of a second mold which was used (in combination with a different, third mold) to form the substrate 12. The first mold may define a profile which corresponds to the desired final shape and configuration of the therapeutic composition 14 once it is overmolded on the substrate 12. In this manner, when the first mold is suitably positioned, the profile of the first mold may define a cavity and the therapeutic composition 14 may be injected between the first mold and the substrate 12 to fill the cavity. Once the cavity is filled, the first mold may be separated from the substrate 12, leaving the therapeutic composition 14 on the substrate 12 in a configuration corresponding to the cavity.

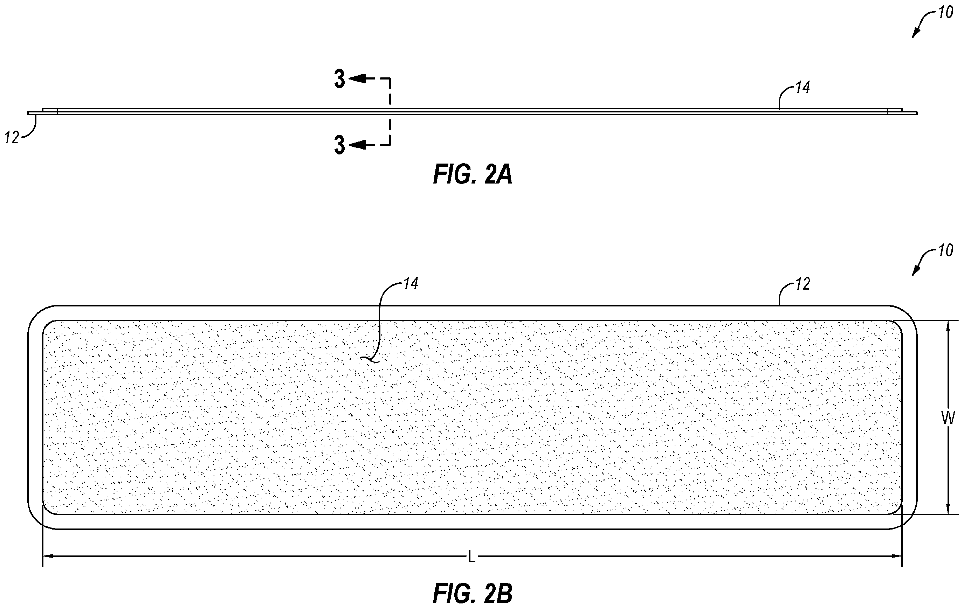

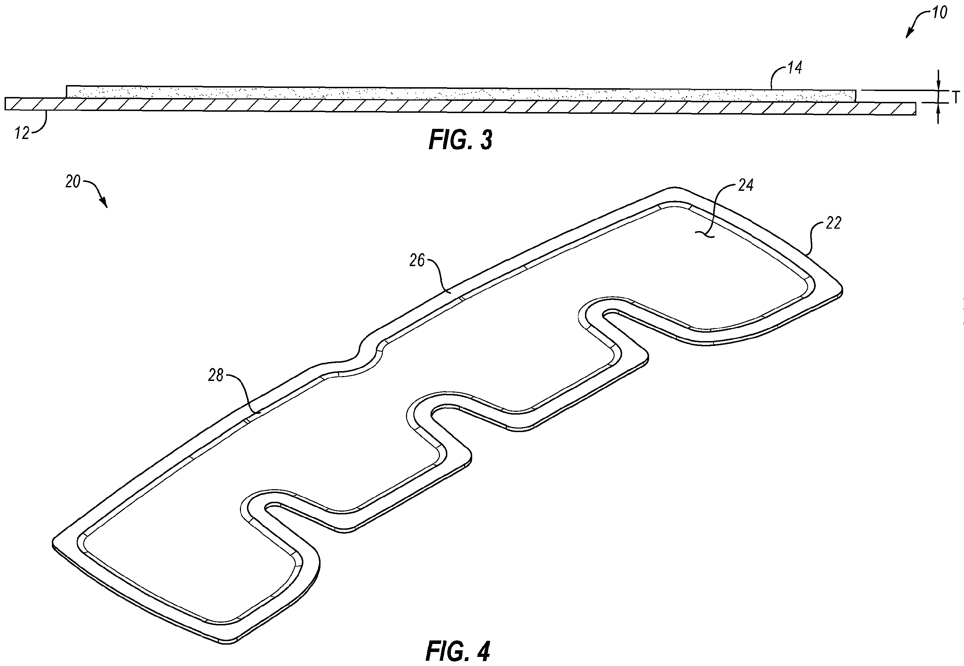

Since the shape and configuration of the therapeutic composition 14 as overmolded on the substrate 12 may correspond to the profile at least partially defined by the first mold, it should be appreciated that the structural characteristics of the therapeutic composition 14 as overmolded on the substrate 12 may be predetermined and/or may be altered by changing the profile at least partially defined by the first mold which, in turn, may change the cavity into which the therapeutic composition 14 is injected. For example, as illustrated in Figures 2B and 3, the therapeutic composition 14 as overmolded on the substrate 12 may include a width W, a length L, and a thickness T, any one or more of which may be varied along all or part of the substrate 12 to change the configuration of the therapeutic composition 14. By way of non-limiting example, one or both of the width W and the thickness T may be varied along the length L, and/or the thickness T may be varied across the width W and along the length L or at discrete locations along the length L. In the illustrated form, the therapeutic composition 14 may have a continuous configuration on the substrate 12. However, it should be understood that the profile of the first mold may be changed to provide the therapeutic composition 14 on the substrate 12 in any desired number of discrete portions and the width, length and/or thickness of each discrete portion may be the same or different than one or more of the other portions. Additionally, in forms where the therapeutic composition 14 includes two or more discrete portions on the substrate 12, it is contemplated that the therapeutic composition 14 could be the same in each discrete portion, or could be different in each or some of the discrete portions. For example, the therapeutic agent present in the therapeutic composition 14 could be the same in each discrete portion, or could be different in each or some of the discrete portions.

The therapeutic composition 14 may be overmolded having one or more indicators of position to facilitate alignment of the therapeutic composition 14 over the teeth. By way of non-limiting example, such indicators of position may be formed as three-dimensional lines, marks, text, or other symbols, or as one or more shapes corresponding to or mimicking a shape of one or more teeth over which the therapeutic composition 14 may be placed.

In the context of the oral treatment strip 10, it should be appreciated that variations in the therapeutic composition 14 as overmolded on the substrate 12 may be pursued to facilitate treatment of a particular area or areas, and/or the type of treatment applied to a single area, a particular area, or particular areas. For example, the therapeutic composition 14 may have two or more discrete portions when sufficiently spaced apart may be utilized for treatment of non-contiguous teeth and/or oral tissue. Additionally, or alternatively, when the therapeutic composition 14 includes two or more discrete portions on the substrate 12, different or similar therapeutic agent or agents may be disposed in one or more of the discrete portions, which may allow treatment of different conditions on contiguous or non-contiguous teeth and/or on oral tissue to be contemplated.

An alternative exemplary embodiment of an oral treatment strip 20 is illustrated in Figure 4. The oral treatment strip 20 may include a substrate 22 and a cavity 24 which may be recessed relative to surface 26 and may be surrounded by a sidewall 28. The substrate 22 may provide support and flexibility for the oral treatment strip 20. Generally speaking, the cavity 24 may provide a recess into which a therapeutic composition (not shown) may be overmolded. The therapeutic composition may, for example, be in the form of a gel, suspension, liquid, paste, putty, foam, or the like, and the therapeutic composition may be the same or similar to therapeutic compositions 14, 114 described herein. While the substrate 22 of the oral treatment strip 20 may include a generally rectangular configuration and may have one or more notches 30, 32 in the illustrated form, it should be appreciated that other shapes and variations thereof are possible.

The therapeutic composition may be overmolded into the cavity 24 such that the therapeutic composition as overmolded onto the substrate 22 is provided with a shape and form which at least partially, substantially, or at least substantially corresponds to the shape and form of the cavity 24. It will be appreciated, after reviewing this disclosure, other variations are also possible. For example, the therapeutic composition could extend beyond the cavity 24 and partially or completely cover the surface 26 around all or part of the cavity 24. The therapeutic composition may be overmolded onto the substrate 22 by positioning a first mold relative to the substrate 22. The relative positioning of the mold and the substrate 22 may be maintained through any suitable means. In forms where the desired final shape and configuration of the therapeutic composition as overmolded on the substrate 22 corresponds to the cavity 24, and the therapeutic composition is flush with surface 26, then the first mold may generally be flat in configuration such that it is the cavity 24 that defines the final shape and configuration of the therapeutic composition. It will be appreciated, after reviewing this disclosure, in other forms, including those where the therapeutic composition extends above the surface 26 and/or partially covers the surface 26, then the first mold may define a profile which corresponds to the desired final shape and configuration of the therapeutic composition once it is overmolded on the substrate 22. When the first mold is suitably positioned, the therapeutic composition may be injected between the first mold and substrate 22 to fill the cavity 24, or the cavity 24 and any additional cavity that may be defined by the first mold. Once filled, the first mold may be separated from the substrate 22, which may leave the therapeutic composition on the substrate 22.

After reviewing this disclosure, it should be appreciated that the structural characteristics of the therapeutic composition as overmolded on the substrate 22 may be predetermined and/or altered by changing the profile defined by the cavity 24 and/or any additional cavity that may be defined by the first mold. Similarly, forms where the therapeutic composition includes two or more discrete portions on the substrate 22 are also contemplated. In these forms, the therapeutic composition could be the same in each discrete portion, or could be different in each or some of the discrete portions. For example, the therapeutic agent present in the therapeutic composition could be the same in each discrete portion, or could be different in each or some of the discrete portions.

In the context of the oral treatment strip 20, it should be appreciated after reviewing this disclosure that variations in the therapeutic composition as overmolded on the substrate 22 may be pursued to facilitate treatment of a particular area or areas, and/or the type of treatment applied to a single area. For example, the therapeutic composition having two or more discrete portions when sufficiently spaced apart may be utilized for treatment of non-contiguous teeth and/or oral tissue. Additionally, or alternatively, when the therapeutic composition includes two or more discrete portions on the substrate 22, different or similar therapeutic agent or agents may be disposed in one or more of the portions, which may allow treatment of different conditions on contiguous or non-contiguous teeth and/or on oral tissue to be contemplated. While the cavity 24 has been illustrated and described in connection with the oral treatment strip 20, it should be appreciated after reviewing this disclosure that the other embodiments described herein, including the oral treatment strip 10 discussed above and the oral treatment tray 110 discussed below, could be provided with one or more cavities into which a therapeutic composition could be disposed on injected.

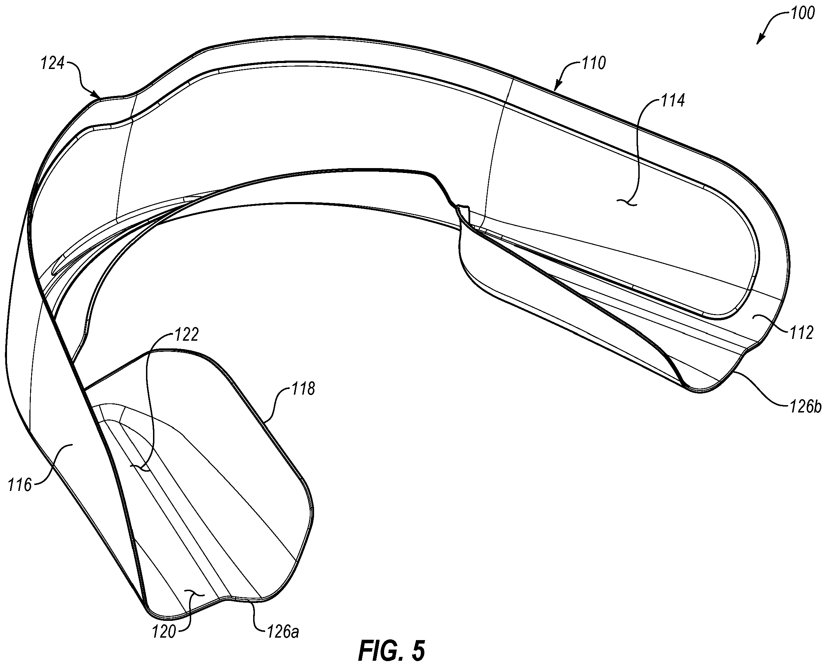

Turning now to Figure 5, there is illustrated an exemplary oral treatment system 100 that may include an oral treatment tray 110 and a therapeutic composition 114 which may be overmolded on a substrate 112 of the tray 110. The substrate 112 may provide support and flexibility, and the therapeutic composition 114 may, for example, be in the form of a gel, suspension, liquid, paste, putty, foam, and the like. The tray 110 may have any desired size, shape, configuration, pattern and/or arrangement depending, for example, upon the intended use. In some embodiments, the tray 110 may have an elongate, curved shape that substantially mimics or approximates at least a portion of an upper or lower dental arch. For example, the tray 110 may have as a square, ovoid, arched or tapered arch shape. In the illustrated form, the tray 110 generally has an arched shape and may include an outer wall 116, an inner wall 118, and a surface 120 may be at least partially interposed between at least a portion of the outer wall 116 and the inner wall 118. A trough 122 may be at least partially defined between the outer wall 116, the inner wall 118, and the surface 120. In this arrangement, the tray 110 may be configured for placement over a dental arch such that the outer wall 116 may be oriented over labial/buccal surfaces of teeth, the inner wall 118 may be oriented over lingual surfaces of the teeth, and the surface 120 may be oriented over upper or lower surfaces of the teeth. While the tray 110 may be described as having the outer wall 116, the inner wall 118 and the surface 120, after reviewing this disclosure, it is to be understood that the tray 110 may have a unibody, one-piece structure wherein the outer wall 116, the inner wall 118, and/or the surface 120 are one or more parts of an integrated dental tray, which may be an integral, one-piece dental tray. In some forms, the width of the surface 120 at an anterior end 124 of the tray 110 and at a transition point between the anterior end 124 and posterior ends 126a and 126b of the tray 110 may be less than a width of the surface 120 at a region proximate posterior ends 126a and 126b. The change in width may be a gradual reduction or may be a more abrupt reduction such as that shown in Figure 5. In some embodiments, the inner wall 118 may have a reduced width or may terminate at or before the transition between the anterior end 124 and the posterior ends 126a and 126b. While not previously mentioned, it should also be understood that the tray 110 may include the outer wall 116, the inner wall 118, and/or the surface 120 that are substantially devoid of structures corresponding to the size and shape of a person's unique dentition, may be formed to approximate human dentition, and/or may be molded to a person's unique dentition.

In the illustrated form, the therapeutic composition 114 may be overmolded in a shape generally corresponding to the substrate 112. After reviewing this disclosure, it will be appreciated in other forms the therapeutic composition 114 may be overmolded in a shape that is generally different than the underlying substrate 112, further details of which will be provided below. For example, in some embodiments, the therapeutic composition 114 may be molded over the entire interior surface of tray 110 (*i.e.,* over the entire surface of outer wall 116, inner wall 118 and surface 120). In other embodiments, therapeutic composition 114 may be molded over only a portion of the interior surface of tray 110, as depicted in Figure 5. Further details relating to the materials from which the substrate 112 and the therapeutic composition 114 may be formed are provided below.

Generally speaking, the therapeutic composition 114 may be overmolded onto the substrate 112 by positioning a first mold relative to the substrate 112 of the tray 110. The relative positioning of the mold and the substrate 112 of the tray 110 may be maintained through any suitable means and may, for example, be accomplished through the use of a second mold which may be used (in combination with a different, third mold, if desired) to form the substrate 112 in the form of the tray 110. The first mold may define a profile which corresponds to the desired final shape and configuration of therapeutic composition 114 once it is overmolded on the substrate 112. In this manner, when the first mold is suitably positioned, the profile of the first mold may define a cavity between it and the substrate 112 and the therapeutic composition 114 may be injected between the first mold and substrate 112 to fill the cavity. The cavity of the first mold may additionally include a space corresponding to the shape and configuration of the tray 110 to facilitate placement of tray 110 into the first mold. Once the cavity is filled, the first mold may be separated from the substrate 112, which may leave the therapeutic composition 114 on the substrate 112 in a configuration corresponding to the configuration of the cavity.

Since the shape and configuration of the therapeutic composition 114 as overmolded on the substrate 112 may correspond to the profile defined by the first mold, after reviewing this disclosure, it should be appreciated that the structural characteristics of the therapeutic composition 114 as overmolded on the substrate 112 may be predetermined and/or altered by, for example, changing the profile defined by the first mold which, in turn, may change the cavity into which the therapeutic composition 114 is injected. For example, as discussed above in connection with the therapeutic composition 14, one more of the thickness, height, width, length, etc. of the therapeutic composition 114 overmolded on the substrate 112 may be varied along all or part of the substrate 112, which may change the configuration of the therapeutic composition 114. Further, while the therapeutic composition 114 may have a continuous configuration on the substrate 112 in the illustrated form, after reviewing this disclosure it should be appreciated that the profile of the first mold may be changed to provide the therapeutic composition 114 on the substrate 112 in discrete portions where the thickness, height, width, length, etc. of each discrete portion may be the same as or different than the other portions. Additionally, in forms where the therapeutic composition 114 includes two or more discrete portions on the substrate 112, it is contemplated that the therapeutic composition 114 could be the same in each discrete portion, or could be different in each or some of the discrete portions. For example, a different therapeutic agent could be provided in each or some of the discrete portions.

In the context of the tray 110, it should be appreciated that variations in the therapeutic composition 114 as overmolded on the substrate 112 may be pursued to facilitate treatment of a particular area or areas, and/or the type of treatment applied to a single area or multiple areas. For example, the therapeutic composition 114 may have two or more discrete portions when sufficiently spaced apart may be utilized for treatment of non-contiguous teeth and/or oral tissue. Additionally, or alternatively, when the therapeutic composition 114 includes two or more discrete portions on the substrate 112, different or similar therapeutic agent or agents may be disposed in one or more of the discrete portions, which may allow treatment of different conditions on contiguous or non-contiguous teeth and/or on oral tissue to be contemplated. By way of non-limiting example, the substrates 12, 112 from which the strip 10 and the tray 110, respectively, may be at least partially formed, may be at least substantially impermeable or semi-permeable to liquids, such as water and saliva, such that the strip 10 and the tray 110 may form a moisture resistant barrier around teeth, gums, and/or other oral tissue. The substrates 12, 112 may be flexible and/or compliant and may exhibit plastic and/or elastic deformation, which may enable the strip 10 and/or the tray 110 to at least substantially conform to a dental arch. In one exemplary form, the strip 10 and the tray 110 may be formed using a molding process, such as, for example, an injection molding process, a compression molding process, a blow molding process, or a thermoforming process. In addition, the substrates 12, 112 of the strip 10 and/or the tray 110 may be formed from one or more polymers (including thermoset polymers, thermoplastic polymers, and thermoplastic elastomeric polymers), silicones, waxes, resins, or combinations thereof, as will be described in greater detail below. Non-limiting examples of polymers that may be used to form the substrates 12, 112 may include synthetic and natural polymers. In some embodiments, such polymers may be crosslinked polymers that may exhibit elastic deformation. As non-limiting examples, one or more polymers used to form the substrates 12, 112 may be selected from polyolefins, polyesters, polyurethanes, copolymers, thermoplastic elastomers, thermoset elastomers, natural polymers, and mixtures thereof. Examples of polyolefins include polyethylene (including high density polyethylene (HDPE), low density polyethylene (LDPE), or ultralow density polyethylene, (ULDPE)), polypropylene (PP), and polytetrafluoroethylene (PTFE) (e.g., TEFLON), thermoplastic polyolefins (e.g., thermoplastic polyethylene, thermoplastic polypropylene, thermoplastic olefins), and propylene-based elastomers. Other synthetic polymers include ethylene-vinyl acetate copolymer, ethylene-vinyl alcohol copolymer, acetates (e.g., ethyl vinyl acetate (EVA) and polyvinyl acetate (PVA)), polyvinyl alcohol (PVOH), polyesters (such as polyethylene terephthalate, or PETE), polycarbonates, methacrylates, acrylates, polyamides (*e.g.,* nylon), polyurethanes, polyvinyl chloride (PVC), synthetic rubber, phenol formaldehyde resin (Bakelite), neoprene, polystyrene, polyacrylonitrile, polyvinyl butyral (PVB), silicone elastomers, thermoplastic elastomers, and natural polymers.

As used herein, "thermoplastic elastomer" or "TPE" means and includes polymers or combinations of polymers having both thermoplastic and elastomeric properties. Such thermoplastic elastomers may be softened upon heating to exhibit flowability and may set upon cooling to exhibit elastic deformation. Examples of thermoplastic elastomers ("TPEs") that may be used to form the substrates 12, 112 may include, but are not limited to, olefin-based, styrene-based, polyester-based, polyurethane-based, polyvinyl chloride-based, polyamide-based, polyisoprene-based, polybutadiene-based, polybutene-based, siloxane-based, polycarbonate-based, ethylene-vinyl acetate-based, ethylene-methacrylate-based, polyacrylianitrile-based, polyacrylic ester-based, acrylic-based, and/or copolymers or mixtures thereof.

Natural polymers that may be used to form the substrates 12, 112 may include, but are not limited to, shellac, natural rubber, polysaccharides, cellulosic ethers, cellulose acetate, and proteins.

In some embodiments, the substrates 12, 112 used to form the strip 10 and/or the tray 110 may be pliant and include at least one wax and at least one polymer, such as a thermoplastic elastomer. The wax(es) and the thermoplastic elastomer(s) may be combined and molded to form the pliant substrate of the strip 10 and/or the tray 110. In some embodiments, the pliant substrate may be formed by an injection molding process by injecting a mixture of one or more waxes and one or more thermoplastic elastomers into a mold cavity corresponding in configuration to the strip 10 or the tray 110. In other embodiments, as would be recognized by one skilled in the art, the strip 10 and/or the tray 110 may be constructed from various suitable materials and processes, such as compression molding, rotational molding, blow molding, thermoforming, extrusion, and the like.

In some embodiments where a pliant substrate is used, the pliant substrate may be thermally stable and may exhibit elastically and/or plastically deformable properties. For example, the pliant substrate may exhibit both plastically and elastically deformable properties depending on the amount of deformation applied and the temperature at which the pliant substrate is deformed. For example, the pliant substrate may exhibit plastic deformation until stressed to a certain point at which the pliant substrate will begin to exhibit elastic deformation. Forms including at least one wax and at least one polymer such as a thermoplastic elastomer may be plastically deformable at room temperature (*i.e.,* between about 20 and about 25° C) and thermally stable up to a temperature of at least 40° C. In these and other embodiments, the pliant substrate may be deformed over an individual's teeth when the strip 10 and/or tray 110 is placed over the individual's teeth.

For forms where a pliant substrate includes at least one wax and at least one polymer such as a thermoplastic elastomer, the pliant substrate may include one or more waxes in an amount by weight, based on the total weight of the composition forming the substrate, in the range of about 40% to about 95%, in the range of about 50% to about 93%, in the range of about 60% to about 90%, or in the range of about 70% to about 85%. Examples of waxes that may be used include, but are not limited to, petroleum waxes, distilled waxes, synthetic waxes, mineral waxes, vegetable waxes, and animal waxes. Examples of petroleum waxes include paraffin waxes, intermediate waxes, microcrystalline waxes, distilled waxes, and petroleum jelly. By way of non-limiting example, paraffin wax, intermediate wax, and/or microcrystalline wax can be blended to provide a desired level of plastic deformation at room temperature and dimensional stability at higher temperatures. Additional details regarding compositions that include at least one wax and which may be used to form a pliant substrate are found in U.S. Patent Application No. 15/027,636.

Pliant substrates described herein may include one or more polymers in an amount by weight, based on the total weight of the composition forming the substrate, in the range of about 5% to about 60%, in the range of about 7% to about 50%, in the range of about 10% to about 40%, or in the range of about 15% to about 30%. The pliant substrate may also include one or more auxiliary components such as plasticizers, flow modifiers, and/or fillers. When included, these components may be present in an amount by weight, based on the total weight of the composition forming the substrate, in the range of about 0.01% to about 5%, in the range of about 0.1% to about 4%, or in the range of about 1% to about 3%.

The therapeutic compositions 14, 114 may include at least one therapeutic agent effective for treating a condition, such as an oral condition. The therapeutic compositions 14, 114 may also include at least one polymer material and/or at least one solvent or carrier. Additionally, the therapeutic compositions 14, 114 may include at least one hydrophobic agent and/or at least one rheology modifier. The polymer, the therapeutic agent, the hydrophobic agent and/or the rheology modifier, may, for example, be mixed, distributed, dispersed or dissolved in the solvent or carrier.

In one exemplary form, the therapeutic compositions 14, 114 include a polymer material that exhibits polarity and/or that exhibits solubility in polar solvents, such as water or alcohols (i.e., the polymer material includes one or more hydrophilic polymers). Such hydrophilic polymers may be any non-crosslinked or cross-linked monomers, oligomers or polymers and may, in some embodiments, act as tissue adhesion agents, tackifying agents, and/or thickening agents in the therapeutic compositions 14, 114. As a non-limiting example, the therapeutic compositions 14, 114 may include one or more of pyrrolidone-based polymers (e.g., polyvinyl pyrrolidone (PVP)), PVP copolymers (e.g., PVP/vinyl acetate copolymers), acrylic acid-based polymers (e.g., carboxypolymethylene or a carbomer such as Carbopol^{®} and Pemulen^{™}, which are commercially available from Lubrizol Advanced Materials, Inc.), oxazoline-based polymers (e.g., polyethyloxazoline and other poly(2-oxazolines)), polyethylene oxide, which is also known as polyethylene glycol, (e.g., Polyox^{™}, commercially available from the Dow Chemical Company), polyacrylates, polyacrylamides, copolymers of polyacrylic acid and polyacrylamide, cellulose-based polymers (e.g., hydroxypropyl methylcellulose, carboxymethylcellulose, carboxypropylcellulose, and cellulosic ethers), polysaccharide gums, proteins, and derivatives thereof. Further non-limiting examples of pyrrolidone-based polymers that could be used include one or more grades of Kollidon^{®} PVP polymers (commercially available from BASF) such as Kollidon^{®} 30, having a weight average molecular weight (M_{w}) of between about 44,000 and about 54,000, Kollidon^{®} VA 64, having a M_{w} of between about 45,000 and 70,000 and Kollidon^{®} 90 F, having a M_{w} of about 1 million to about 1.5 million.

The therapeutic compositions 14, 114 may include the polymer material in an amount by weight, based on the total weight of the composition, in the range of about 1% to about 50%, in the range of about 3% to about 30%, or in the range of about 5% to about 20%, just to provide a few non-limiting examples.

As previously discussed, the therapeutic compositions 14, 114 may include one or more solvents or carriers into which the polymer material, and any other components in the composition, may be combined, mixed, dissolved, distributed or dispersed. In some embodiments, the polymer material, and any other components in the composition, may be substantially homogenously distributed into the solvent and/or carrier material. In one exemplary form, such solvents and carriers may be in the form of a liquid or gel. By way of non-limiting example, polar compounds and polar solvents may be used as the solvent or carrier in the therapeutic compositions 14, 114. Examples of suitable polar compounds and polar solvents may include, but are not limited to, water, alcohols such as methyl, ethyl and isopropyl alcohol, diols and polyols such as ethylene and propylene glycol compounds (e.g., polyethylene glycol ("PEG") and polypropylene glycol ("PPG"), hexylene glycol, butylene glycol, ethoxydiglycol, glycerin, sorbitol, mannitol, maltitol, and other sugar alcohols) and diols (1,3-propandiol). When the solvent and/or carrier is included in the therapeutic compositions 14, 114, the solvent and/or carrier may be present in an amount by weight, based on the total weight of the composition, in the range of about 0.5% to about 50%, in the range of about 10% to about 40%, or in the range of about 20% to about 30%, just to provide a few non-limiting examples. When determining the exact amount of the solvent and/or carrier which is included in the composition, consideration may be given to providing the therapeutic composition with a viscosity that facilitates use of the therapeutic composition in the molding process. For example, amongst other things, the viscosity of the therapeutic agent will facilitate its passage through relevant molding equipment.

As indicated above, the therapeutic compositions 14, 114 may include at least one therapeutic agent effective for treating a condition. By way of non-limiting example, therapeutic agents that may be included in the therapeutic compositions 14, 114 may include any substance that has cosmetic, personal care, diagnostic or therapeutic activity, and that may or may not have pharmacological activity. In one exemplary form, the therapeutic agent may be effective for treating an oral condition and may include, but is not limited to, dental bleaching and/or whitening agents, desensitizing and/or remineralizing agents, anesthetics, anti-plaque agents, anti-tartar agents, antimicrobials, antibiotics, disinfectants and/or antiseptics, anti-oxidants, healing agents for soft oral tissues such as gingival soothing agents, and glossing agents. Non-limiting examples of dental bleaching and/or whitening agents include one or more peroxides and/or active oxygen, oxygen or hydrogen peroxide releasing compounds or generators, such as peroxides (e.g., inorganic or metal peroxides, such as hydrogen peroxide), glycerol peroxide, hydrogen peroxide urea adducts (e.g., carbamide peroxide), hydrogen peroxide complexes and/or adducts (e.g., hydrogen peroxide-PVP complexes, such as Peroxydone^{™} complexes available from Ashland), percarbonates (e.g., sodium percarbonate and potassium percarbonate), perborates (e.g., sodium perborate), persulfates (e.g., sodium persulfate), peroxyhydrates (e.g., sodium peroxyhydrate), oxalates (e.g., sodium oxalate), chlorine dioxide, and combinations thereof.

Non-limiting examples of desensitizing and/or remineralizing agents include potassium salts (e.g., potassium nitrate, potassium chlorate, and potassium oxalate), fluoride salts (e.g., sodium fluoride, stannous fluoride, sodium monofluorophosphate, and calcium fluoride), calcium salts (e.g., calcium hydroxide and calcium phosphates), magnesium salts (e.g., magnesium sulfate), hydroxyapatite, amorphous calcium phosphate (ACP), casein phosphopeptide (CPP), ACP-CPP, and strontium salts (e.g., strontium chloride and strontium acetate). Such desensitizing and/or remineralizing agents may be present in an amount sufficient for desensitizing and/or remineralizing teeth. By way of example, the desensitizing and/or remineralizing agents may be present in an amount by weight, based on the total weight of the composition, in a range of about 0.1% to about 10%. It should be appreciated that, in one exemplary form, the remineralizing agents may also function as glossing agents by restoring gloss to enamel. Non-limiting examples of anesthetics include local anesthetics, such as benzocaine and lidocaine. Non-limiting examples of antimicrobial agents include chlorhexidine, triclosan, sodium benzoate, parabens, tetracycline, phenols, cetyl pyridinium chloride, benzoic acid, and quaternary ammonium compounds (e.g., benzalkonium chloride). Non-limiting examples of anti-plaque or anti-tartar agents include pyrophosphate salts. Non-limiting examples of gingival soothing agents include aloe vera, mild potassium nitrate, and isotonic solution-forming salts. Non-limiting examples of anti-oxidants include vitamin A, vitamin C, vitamin E, other vitamins, and carotene. As indicated above, remineralizing agents may act as glossing agents.

When the therapeutic agent included in therapeutic compositions 14, 114 is a dental bleaching and/or whitening agent, it may be included in any desired concentration, such as, for example, in an amount by weight, based on the total weight of the composition, in the range of about 1% to about 90%, in the range of about 1% to about 60%, in the range of about 3% to about 40%, or in the range of about 5% to about 30%. It should be appreciated that the amount of the dental bleaching and/or whitening agent may be adjusted, for example, depending on the intended treatment time for each bleaching session.

In embodiments where the therapeutic compositions 14, 114 include a peroxide whitening or bleaching agent, such as hydrogen peroxide or carbamide peroxide, the therapeutic compositions 14, 114 may also include one or more peroxide stabilizers or pH buffering agents, such as phosphate salts, ammonium hydroxide, sodium hydroxide, potassium hydroxide, sodium phonsphate, potassium phosphate aminopolycarboxylic acid (e.g., ethylenediamine tetraacetic acid (EDTA) or salts thereof), triethanolamine, TRIS, urea, polyphosphates, pyrophosphates (e.g., sodium pyrophosphate), hydroxypyridones or salts thereof, a stannic acid salt (e.g., sodium stannate), citric acid, phosphoric acid, nitrates (e.g., sodium nitrate), organophosphonate salts, aminocarboxylic acid salts, and combinations thereof. For the sake of clarity, as used herein, the term "salt" means and includes the base-addition salt of a compound with an alkali metal salt (i.e., lithium, sodium or potassium), an alkaline earth metal salt (e.g., calcium or magnesium), or an ammonium salt. Such stabilizers may be included in an amount sufficient to stabilize hydrogen peroxide. By way of non-limiting example, the stabilizer(s) may be present in an amount by weight, based on the total weight of the composition, in the range of about 0.1% to about 10%. By way of non-limiting example, the pH buffer(s) may be present in an amount by weight, based on the total weight of the composition, in the range of about 0.1% to about 30%.

The therapeutic compositions 14, 114 may optionally include one or more hydrophobic agents which, when present, may aid in or enable release of therapeutic compositions 14, 114 from a mold. For example, the presence of the hydrophobic agent(s) may result in preferential adherence of the therapeutic compositions 14, 114 to the substrate 12, 112 instead of the surface of a mold used in the overmolding process. The hydrophobic agent(s) may be added to the therapeutic compositions 14, 114 in an amount sufficient to assist in release of the therapeutic compositions 14, 114 from a surface of a mold used in the overmolding process. While not wishing to be bound by any particular theory, it is believed that the hydrophobic agent(s) (such as an oil and/or fumed silica) may assist in release of the therapeutic compositions 14, 114 from the mold at a range of temperatures regardless of the viscosity and adhesiveness of the therapeutic compositions 14, 114. Accordingly, the therapeutic compositions 14, 114 may be formulated with a high viscosity and a high adhesiveness while readily releasing from the mold used in the overmolding process and, in some embodiments, selectively sticking to the substrate 12, 112 over the mold used in the overmolding process.

Non-limiting examples of hydrophobic agents that may be included in the therapeutic compositions 14, 114 include oils, waxes, hydrophobic fillers, silicone-based compounds, cellulose-based hydrophobic polymers, menthols, and hydrophobic surfactants. More particular examples of hydrophobic agents include, but are not limited to, mint oils (e.g., peppermint oil, spearmint oil, and wintergreen oil), citrus oils (e.g., orange oil), cinnamon oil, camphor oil, basil oil, amaranth oil, lavender oil, limonene, siloxanes (e.g., dimethicone), silanes, silicones, non-ionic surfactants (e.g., polyglycerol alkyl ethers, glucosyl dialkyl ethers, crownethers, ester-linked surfactants, and polyoxyethylene alkyl ethers), and anionic surfactants (e.g., sodium laurel sulfate, alkyl sulfates, acyl glycinates, and stearate salts), fumed silica, and combinations thereof.

When included in the therapeutic compositions 14, 114, the hydrophobic agent may be present in an amount by weight, based on the total weight of the composition, in the range of about 0.5% to about 25%, in the range of about 1% to about 15%, or in the range of about 2% to about 12%. In one particular but non-limiting form, the therapeutic compositions 14, 114 may contain one or more oils and hydrophobic silica. In this exemplary form, the one or more oils may be present in an amount by weight, based on the total weight of the composition, in the range of about 0.01% to about 5%, in the range of about 0.05% to about 2%, or in the range of about 0.3% to about 0.8%, and the hydrophobic silica may be present in an amount by weight, based on the total weight of the composition, in the range of 0% to about 20%, in the range of about 1% to about 15%, or in the range of about 2% to about 11%.

The therapeutic compositions 14, 114 may also optionally include one or more rheological modifiers, fillers, colorants, flavorants, sweeteners, and the like. As a non-limiting example, sucralose or another suitable sweetener may be included in the therapeutic compositions 14, 114 in an amount by weight, based on the total weight of the composition, of less than or equal to about 5%. In one exemplary form, the therapeutic compositions 14, 114 may be a tooth whitening composition that includes at least one polymer material, at least one solvent, at least one therapeutic agent and, optionally, a hydrophobic agent. In one more particular but non-limiting form, the therapeutic compositions 14, 114 may include polyvinyl pyrrolidone and/or polyethyloxazoline, water and/or ethanol, and a peroxide. In another particular but non-limiting form, the therapeutic compositions 14, 114 may include polyvinyl pyrrolidone and/or polyethyloxazoline, water and/or ethanol, a therapeutic agent, peppermint oil and/or fumed, hydrophobic silica. In yet another particular but non-limiting form, the therapeutic compositions 14, 114 may include hydrogen peroxide, other bleaching agents, other medicaments, and/or one or more rheological modifiers. In this and other forms, the therapeutic compositions 14, 114 may be a sticky viscous gel at room temperature and at molding temperature. In some embodiments, one or more components of the therapeutic compositions 14, 114 may be temperature sensitive and the therapeutic compositions 14, 114 may be overmolded at about room temperature (approximately 25° C) or at lower temperatures.

In some embodiments, the therapeutic compositions 14, 114 may be configured as a sticky and/or adhesive gel or paste having a sufficient viscosity to enable the therapeutic compositions 14, 114 to remain substantially in place during manufacture, distribution, storage, promotion, and use. For example, the viscosity could prevent the therapeutic composition from flowing out of a tray or off of a strip. In some forms where a cavity similar to the cavity 24 is utilized, the therapeutic composition could have a lower viscosity and be held in place by the cavity and/or a cover such as a plastic film which may be placed over the therapeutic composition following the molding process. In other embodiments, the therapeutic compositions 14, 114 may be configured as substantially dry to the touch that becomes increasingly sticky and/or viscous upon contact with a particular liquid, such as water or saliva. In addition, the gel or paste form could have properties similar to a liquid, a rubbery composition, or even a composition that is harder and dry to the touch.

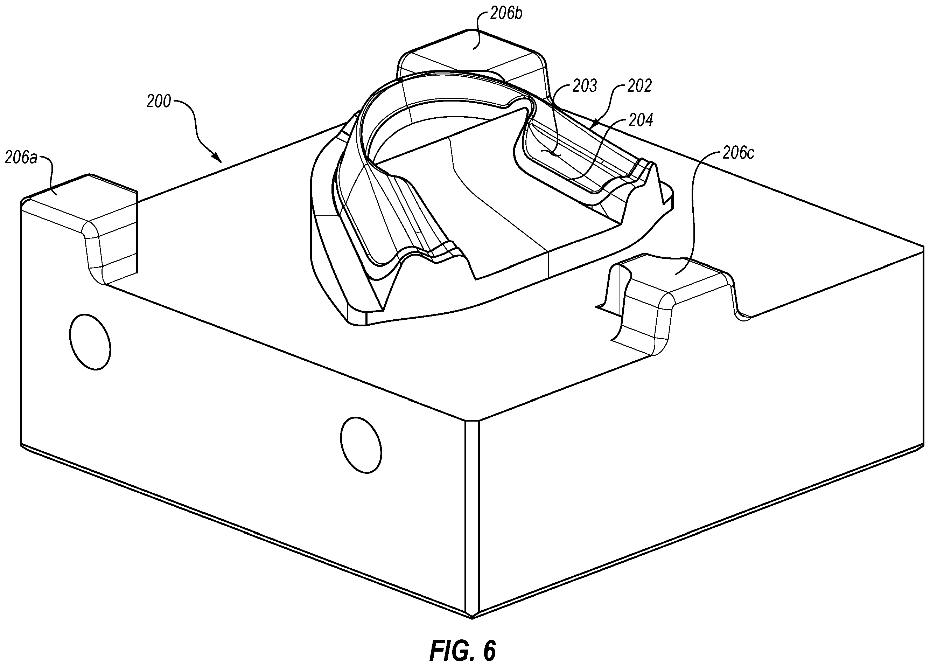

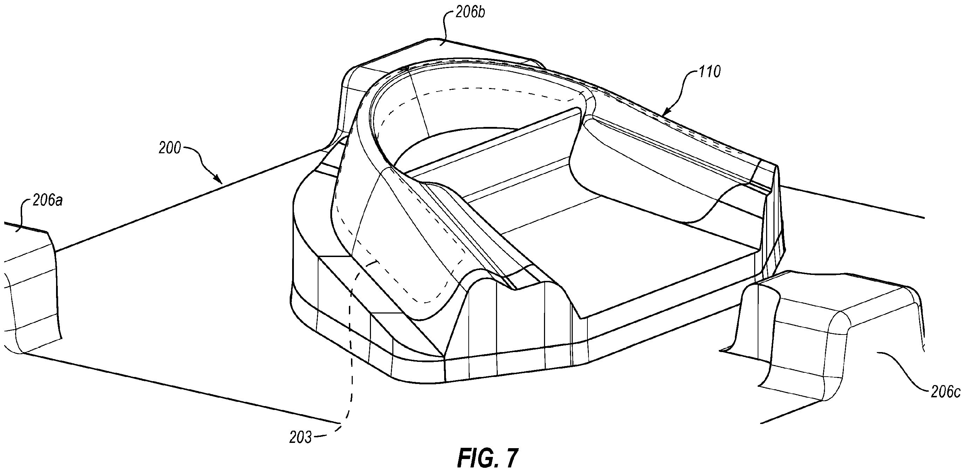

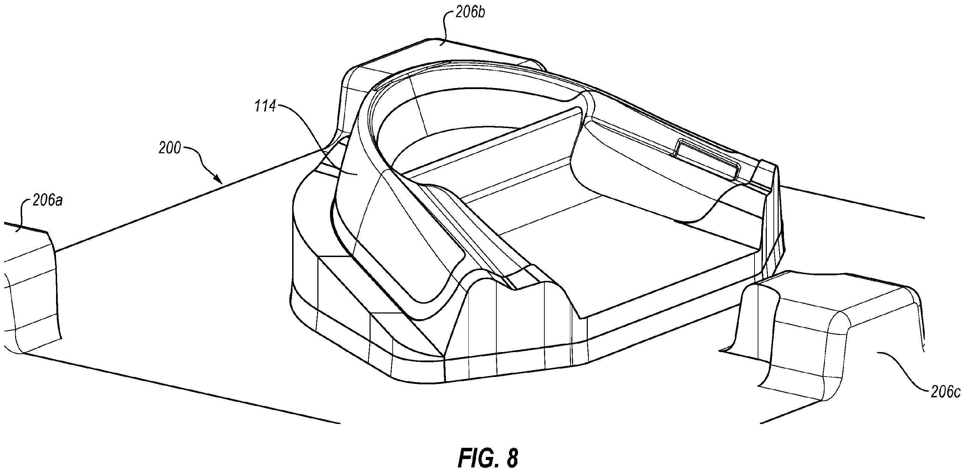

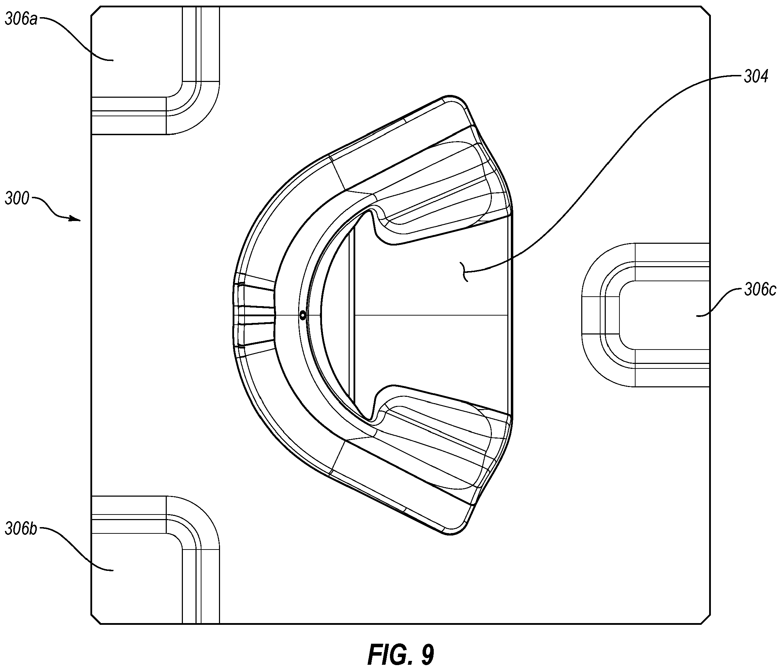

Referring now generally to Figures 6-9, further details will be provided with respect to the overmolding of the therapeutic composition 114 on the substrate 112 of the tray 110. After reviewing this disclosure, it should be appreciated that the following details may also be applicable to the process of overmolding the therapeutic composition 14 on the substrate 12 of the strip 10. The exemplary mold 200 shown in Figure 6 may be used for overmolding the therapeutic composition 114 onto the substrate 112 of the tray 110. The mold 200 may include one or more projections, such as projections 206a-c, and a projecting portion 202 which may generally correspond to the configuration of the tray 110 except that the projecting portion 202 may include a recessed portion 203 that may be at least partially defined by one or more surfaces 204. When the tray 110 is positioned relative to the mold 200, the recessed portion 203 may define at least a portion of a cavity into which the therapeutic composition 114 is injected. Thus, after revewing this disclosure, it should be appreciated that the recessed portion 203 may define the configuration of the therapeutic composition 114 as overmolded on the substrate 112. For example, Figure 7 illustrates the mold 200 positioned relative to the tray 110 with the recessed portion 203 shown in phantom or broken lines. Once the therapeutic composition 114 is injected between the tray 110 and the mold 200, it may fill the cavity defined by the tray 110 and the recessed portion 203 and may leave the therapeutic composition 114 in an overmolded form having a desired configuration which may correspond to the recessed portion 203. The resulting exemplary configuration of the recessed portion 203 is best seen, for example, in Figure 8 where the tray 110 has been removed to show the form of the therapeutic composition 114 following injection between the tray 110 and the mold 200. It should be appreciated that Figure 8 is for illustrative purposes and that, in practice, the therapeutic composition 114 would adhere to the substrate 112 of the tray 110 such that it would be carried with the tray 110 when the tray 110 is displaced from the mold 200. During the overmolding of the therapeutic composition 114 onto the substrate 112 of the tray 110, it is contemplated that the positioning of the tray 110 relative to the mold 200 may be fixed through any suitable fashion. For example, one or more clamps, an additional mold or molds, and/or a vacuum source could be used. In one exemplary form where another mold is used, it may have the configuration of a mold 300 such as illustrated in Figure 9. The mold 300 generally may include one or more recesses, such as recesses 306a-c and a cavity 304 which may have a corresponding but opposite configuration of a tray mold (not shown) which may be used in combination with the mold 300 to form the tray 110. The tray mold may be similar to the mold 200 except, for example, for the absence of the recessed portion 203 such that when the tray mold and mold 300 are positioned relative to one another, a cavity may be defined therebetween that corresponds to the configuration of the tray 110 without the therapeutic composition 114 overmolded thereon. After reviewing this disclosure, it should be appreciated that the mold 300 may be used during formation of the tray the 110, as indicated above. Similarly, in one exemplary form, the mold 300 may first be used with the tray mold (not shown) during an injection molding process to form the tray 110. Following injection of the material forming the substrate 110 between the tray mold and mold 300, the tray mold and mold 300 may be displaced or separated from one another with the resulting tray 110 being retained in the mold 300. For example, a vacuum force could be applied to the mold 300 in order to retain the tray 110 in the mold 300 as the molds are separated. Once the tray mold has been removed, the mold 200 may be positioned relative to the mold 300 and the tray 110 may be retained by the mold 300 with the projections 206a-c respectively received in recesses 306a-c. The therapeutic composition 114 may then be injected between the mold 200 and the tray 110 to overmold the therapeutic composition 114 onto the substrate 112 of the tray 110. Following injection of the therapeutic composition 114, the molds 200 and 300 may be displaced or separated from one another with the therapeutic composition 114 adhered to the substrate 112 of the tray 110 and carried by the tray 110. To the extent the tray 110 may remain in contact with the mold 200 and/or the mold 300 before or after their separation, an additional force may be applied to remove the tray 110 from the relevant mold. For example, a mechanical force could be applied to the tray 110 or air could be injected into the relevant mold. Additionally, or alternatively, the mold or the tray 110 may be cooled to assist in separation of the tray 110 therefrom.

In embodiments where the therapeutic composition 14, 114 includes a peroxide, the therapeutic composition 14, 114 may be overmolded onto the strip 10 or the tray 110 at reduced temperatures to reduce or eliminate peroxide decomposition into oxygen and water during the overmolding process. For example, in some embodiments, the therapeutic composition 14, 114 may be overmolded onto the strip 10 or the tray 110 at a temperature less than or equal to 25°C, less than or equal to 20°C, or less than or equal to 15°C.

While not previously mentioned, it should be appreciated that one or more of the molds discussed herein may be coated with a fluorocarbon coating, such as a polytetrafluoroethylene coating, a silicone elastomer coating, a polypropylene coating, a chlorotrifluoroethylene coating, or a different low-stick or non-stick coating to help facilitate separation of the molds from the tray 110 and/or the therapeutic composition 114. In one exemplary form, the mold 200 may be coated with a polytetrafluoroethylene coating or a different low-stick or non-stick coating which may reduce the clamping force used in the injection molding process and, additionally or alternatively, may counteract any stickiness of the therapeutic composition 114. As a result, this may help release the therapeutic composition 114 from the mold 200. It is also contemplated that the mold 200 may be maintained at a lower temperature than the therapeutic material 114 as injected, which may help the therapeutic material 114 solidify and assume the shape of the cavity at least partially defined or disposed between the mold 200 and the tray 110.

While the subject matter has been described herein in the context of oral treatment devices and related compositions, it should be appreciated that other applications are possible. Moreover, application of the overmolding techniques described herein are not limited solely to the application of therapeutic compositions which include at least one therapeutic agent. Rather, the overmolding techniques disclosed herein are also applicable to the overmolding of compositions including one or more hydrophilic polymers.

One skilled in the art will appreciate that, for this and other processes, operations, and methods disclosed herein, the functions and/or operations performed may be implemented in differing order.

The description of the invention above should not be interpreted as limiting the invention to the disclosed embodiments because those who are skilled in the art to which the invention relates will be able to devise other equivalent forms thereof within the scope of the invention. Variations and changes, which are obvious to one skilled in the art, are intended to be within the scope and nature of the present invention.

Although this invention has been described in terms of certain exemplary embodiments, other embodiments apparent to those of ordinary skill in the art are also within the scope of this invention. Accordingly, the scope of the invention is intended to be defined only by the claims which follow.

## Claims

1. A method, comprising:
positioning a mold relative to a substrate (12/22/112);
injecting a composition (14/114) including a hydrophilic polymer between the mold and the substrate (12/22/112) and overmolding the composition (14/114) onto a surface of the substrate (12/22/112) in an overmolded configuration corresponding to a configuration defined by the mold, the composition being a therapeutic composition overmolded onto the substrate for delivery of the composition to teeth and/or oral tissue; and
separating the mold from the substrate (12/22/112) while substantially retaining the composition (14/114) in the overmolded configuration.

2. The method of claim 1, wherein the substrate (12/22/112) comprises a substantially arch shaped dental tray including a trough (122) defined by inner and outer sidewalls (116, 118), and the composition (14/114) is overmolded on at least a portion of one or both of the inner and outer sidewalls (116, 118).

3. The method of claim 2, further comprising molding the dental tray with at least one thermoplastic polymer.

4. The method of claim 2, wherein the composition includes at least one therapeutic agent effective for treating an oral condition.

5. The method of claim 4, wherein the at least one therapeutic agent is hydrogen peroxide.

6. The method of claim 2, wherein the composition (14/114) is in the form of a deformable gel exhibiting properties effective for selectively maintaining the composition (14/114) in the overmolded configuration until use of the dental tray in an oral treatment.

7. The method of any preceding claim, wherein the composition (14/114) includes hydrogen peroxide and injecting the composition is conducted at a temperature less than about 25° C.

8. The method of any preceding claim, wherein the composition (14/114) further includes at least one therapeutic agent effective for treating an oral condition and at least one hydrophobic agent.

9. The method of any preceding claim, wherein the oral treatment composition is in the form of a gel and further includes at least one hydrophilic polymer.

10. The method of any preceding claim, wherein the substrate is a substantially arch-shaped dental tray.

11. The method of any preceding claim, further comprising:
wherein the mold positioned relative to a substrate is a first mold;
wherein the substrate is a dental tray;
positioning the a first mold relative to a second mold, the first and second molds defining a cavity having a configuration corresponding to the dental tray;
injecting a thermoplastic polymer between the first and second molds to form the dental tray; and
separating the first mold from the second mold and retaining the dental tray in contact with the first mold.

12. The method of any preceding claim, wherein the composition is an oral treatment composition;
wherein the oral treatment composition includes at least therapeutic agent effective for treating an oral condition; and
wherein the at least one therapeutic agent is selected from dental bleaching agents, dental whitening agents, desensitizing agents, remineralizing agents, anesthetics, anti-plaque agents, anti-tartar agents, antimicrobials, antibiotics, disinfectants, antiseptics, anti-oxidants, healing agents, glossing agents and combinations thereof.

13. The method of any preceding claim, wherein the overmolding the composition onto the substrate is conducted at a temperature less than about 25° C.

14. The method of any preceding claim, wherein the oral treatment composition comprises a gel, a liquid, a suspension, a paste, a putty, or a foam.

15. The method of any preceding claim, wherein the oral treatment composition further includes at least one hydrophilic polymer.

## Patentansprüche

1. Ein Verfahren, umfassend:
Positionieren einer Form relativ zu einem Substrat (12/22/112);
Einspritzen einer Zusammensetzung (14/114), die ein hydrophiles Polymer beinhaltet, zwischen der Form und dem Substrat (12/22/112) und Umspritzen der Zusammensetzung (14/114) auf eine Oberfläche des Substrats (12/22/122) in eine umspritzte Konfiguration, die zu einer durch die Form definierten Konfiguration korrespondiert, wobei die Zusammensetzung eine therapeutische Zusammensetzung ist, die auf das Substrat zur Abgabe der Komposition an Zähne und/oder orales Gewebe umspritzt ist; und
Trennen der Form von dem Substrat (12/22/112) während die Zusammensetzung (14/114) im Wesentlichen in der umspritzen Konfiguration verbleibt.

2. Das Verfahren nach Anspruch 1, wobei das Substrat (12/22/112) eine im Wesentlichen bogenförmige Dentalschiene umfasst, die eine Mulde (122) beinhaltet, die durch innere und äußere Seitenwände (116, 118) definiert wird, und die Zusammensetzung (14/114) auf zumindest einem Abschnitt von einer oder beiden der inneren und äußeren Seitenwände (116, 118) umspritzt ist.

3. Das Verfahren nach Anspruch 2, ferner umfassend ein Formen der Dentalschiene mit zumindest einem thermoplastischen Polymer.

4. Das Verfahren nach Anspruch 2, wobei die Zusammensetzung zumindest ein therapeutisches Mittel enthält, das zur Behandlung eines oralen Leidens wirksam ist.

5. Das Verfahren nach Anspruch 4, wobei das zumindest eine therapeutische Mittel Wasserstoffperoxid ist.

6. Das Verfahren nach Anspruch 2, wobei die Zusammensetzung (14/114) in der Form eine verformbaren Gels vorliegt, das Eigenschaften aufweist, die zur selektiven Beibehaltung der Zusammensetzung (14/114) in der umspritzten Konfiguration wirksam sind, bis die Dentalschiene in einer oralen Behandlung verwendet wird.

7. Das Verfahren nach einem der vorhergehenden Ansprüche, wobei die Zusammensetzung (14/114) Wasserstoffperoxid beinhaltet und das Einspritzen der Zusammensetzung bei einer Temperatur von weniger als etwa 25°C durchgeführt wird.

8. Das Verfahren nach einem der vorhergehenden Ansprüche, wobei die Zusammensetzung (14/114) ferner zumindest ein therapeutisches Mittel, das zur Behandlung eines oralen Leidens wirksam ist, und zumindest ein hydrophobisches Mittel beinhaltet.

9. Das Verfahren nach einem der vorhergehenden Ansprüche, wobei die die Oralbehandlungszusammensetzung in der Form eines Gels vorliegt und ferner mindestens ein hydrophiles Polymer enthält.

10. Das Verfahren nach einem der vorhergehenden Ansprüche, wobei das Substrat eine im Wesentlichen bogenförmige Dentalschiene ist.

11. Das Verfahren nach einem der vorhergehenden Ansprüche, ferner umfassend:
wobei die relativ zu einem Substrat positionierte Form eine erste Form ist;
wobei das Substrat eine Dentalschiene ist;
Positionieren der ersten Form relativ zu einer zweiten Form, wobei die erste und die zweite Form einen Hohlraum mit einer zu der Dentalschiene korrespondieren Konfiguration definieren; und
Einspritzen eines thermoplastischen Polymers zwischen der ersten und der zweiten Form, um die Dentalschiene auszubilden; und
Trennen der ersten Form von der zweiten Form und Zurückbehalten der Dentalschiene in Kontakt mit der ersten Form.

12. Das Verfahren nach einem der vorhergehenden Ansprüche, wobei die Zusammensetzung eine Oralbehandlungszusammensetzung ist;
wobei die Oralbehandlungszusammensetzung zumindest ein therapeutisches Mittel beinhaltet, das zur Behandlung eines oralen Leidens wirksam ist; und
wobei das zumindest eine therapeutische Mittel aus Zahnbleichmitteln, Zahnweißmitteln, Desensibilisierungsmitteln, Remineralisierungsmitteln, Anästhetika, Anti-Plaque-Mitteln, Anti-Zahnstein-Mitteln, antimikrobiellen Mitteln, Antibiotika, Desinfektionsmitteln, Antiseptika, Antioxidantien, Heilmitteln, Glanzmitteln und Kombinationen davon ausgewählt ist.

13. Das Verfahren nach einem der vorhergehenden Ansprüche, wobei das Umspritzen der Zusammensetzung auf das Substrat bei einer Temperatur von weniger als etwa 25° C durchgeführt wird.

14. Das Verfahren nach einem der vorhergehenden Ansprüche, wobei die Oralbehandlungszusammensetzung ein Gel, eine Flüssigkeit, eine Suspension, eine Paste, eine Spachtelmasse oder einen Schaum umfasst.

15. Das Verfahren nach einem der vorhergehenden Ansprüche, wobei die Oralbehandlungszusammensetzung ferner zumindest ein hydrophiles Polymer beinhaltet.

## Revendications

1. Procédé comprenant :
le positionnement d'un moule par rapport à un substrat (12/22/112) ;
l'injection d'une composition (14/114) comportant un polymère hydrophile entre le moule et le substrat (12/22/112) et le surmoulage de la composition (14/114) sur une surface du substrat (12/22/112) selon une configuration de surmoulage correspondant à une configuration définie par le moule, la composition étant une composition thérapeutique surmoulée sur le substrat pour l'administration de la composition aux dents et/ou à des tissus buccaux ; et
la séparation du moule et du substrat (12/22/112) tout en retenant sensiblement la composition (14/114) dans la configuration surmoulée.

2. Procédé selon la revendication 1, selon lequel le substrat (12/22/112) comprend un plateau dentaire sensiblement en forme d'arche comportant une cuvette (122) définie par des parois latérales intérieures et extérieures (116, 118), la composition (14/114) étant surmoulée sur au moins une partie de l'une ou des deux parois intérieures et extérieures (116, 118).

3. Procédé selon la revendication 2, comprenant en outre le moulage du plateau dentaire à partir d'au moins un polymère thermoplastique.

4. Procédé selon la revendication 1, selon lequel la composition comporte au moins un agent thérapeutique efficace dans le traitement d'une condition buccale.

5. Procédé selon la revendication 4, selon lequel le au moins un agent thérapeutique est du peroxyde d'hydrogène.

6. Procédé selon la revendication 2, selon lequel la composition (14/114) se présente sous forme d'un gel déformable présentant des propriétés effectives de maintien sélectif de la composition (14/114) dans la configuration surmoulée jusqu'à l'utilisation du plateau dentaire dans un traitement buccal.

7. Procédé selon l'une quelconque des revendications précédentes, selon lequel la composition (14/114) comporte du peroxyde d'hydrogène et l'injection de la composition s'effectue à une température inférieure à environ 25° C.

8. Procédé selon l'une quelconque des revendications précédentes, selon lequel la composition (14/114) comporte en outre au moins agent thérapeutique efficace dans le traitement d'une condition buccale et au moins un agent hydrophobe.

9. Procédé selon l'une quelconque des revendications précédentes, selon lequel la composition de traitement buccal se présente sous la forme d'un gel et comporte en outre au moins un polymère hydrophile.

10. Procédé selon l'une quelconque des revendications précédentes, selon lequel le substrat est un plateau dentaire sensiblement en forme d'arche.

11. Procédé selon l'une quelconque des revendications précédentes, comprenant en outre :
selon lequel le positionnement du moule par rapport au substrat est un premier moule ;
selon lequel le substrat est un plateau dentaire ;
le positionnement du premier moule par rapport à un deuxième moule, les premier et deuxième moules définissant une cavité présentant une configuration correspondant au plateau dentaire ;
l'injection d'un polymère thermoplastique entre les premier et deuxième moules pour former le plateau dentaire ; et
la séparation du premier moule du deuxième moule et le maintien du plateau dentaire au contact du premier moule.

12. Procédé selon l'une quelconque des revendications précédentes, selon lequel la composition est une composition de traitement buccal :
selon lequel la composition de traitement buccal comporte au moins un agent thérapeutique efficace pour le traitement d'une condition buccale ; et
selon lequel le au moins un agent thérapeutique est choisi parmi les agents de blanchiment dentaire, les agents blanchissants dentaires, les agents de désensibilisation, les agents reminéralisants, les anesthésiants, les agents contre la plaque dentaire, les agents anti-tartre, les microbicides, les antibiotiques, les désinfectants, les antiseptiques, les anti-oxydants, les agents de cicatrisation, les agents de brillance et des combinaisons de ceux-ci.

13. Procédé selon l'une quelconque des revendications précédentes, selon lequel le surmoulage de la composition sur le substrat s'effectue à une température inférieure à environ 25° C.

14. Procédé selon l'une quelconque des revendications précédentes, selon lequel la composition de traitement buccal comprend un gel, un liquide, une suspension, une pâte, un mastic, ou une mousse.

15. Procédé selon l'une quelconque des revendications précédentes, selon lequel la composition de traitement buccal comporte en outre au moins un polymère hydrophile.
